# EUROPEAN PATENT SPECIFICATION

(11) **EP 3 923 268 B1**
(45) Date of publication and mention of the grant of the patent: **14.10.2026**
(21) Application number: 20179261.1
(22) Date of filing: 10.06.2020
(51) Int. Cl.: G09G 5/14, H04N 21/431, H04N 21/4402, G06F 3/14

(54) **SCALABLE MULTIVIEWER SYSTEM AND METHOD FOR DISTRIBUTING DATA**
SKALIERBARES MEHRBETRACHTERSYSTEM UND VERFAHREN ZUM VERTEILEN VON DATEN
SYSTÈME MULTIVUE EXTENSIBLE ET PROCÉDÉ DE DISTRIBUTION DE DONNÉES

(43) Date of publication of application: 15.12.2021
(73) Proprietor: Imagine Communications EMEA (UK) Ltd, Kingston Upon Thames, Surrey, KT2 6SR (GB)
(72) Inventor: Schmid, Bjoern, 81671 München (DE)
(74) Representative: Forresters IP LLP

(56) References cited:
- WO-A1-2018/142159
- US-A1- 2002 116 539
- US-A1- 2013 021 524

## Description

The invention generally relates to a scalable multiviewer system. The invention further relates to a method for distributing data from at least one data source to several data sinks via a scalable multiviewer system.

Multiviewer systems allow a user to observe several different audio and/or video signals simultaneously. Traditional multiviewer systems comprise several individual monitors, which each display a single video signal coming from a video source to which the monitor is physically coupled.

These traditional multiviewer systems are increasingly replaced by modern multiviewer systems, wherein a single monitor may receive video signals from several video sources, such that all video signals can be viewed on the same monitor simultaneously or upon demand. Thus, with these modern multiviewer systems, the signals from the several video sources can be displayed on a single large monitor.

Moreover, the signals from these several video sources may be distributed to and viewed at several different locations. However, this may require a multiple replication of the original video signal, such that all video signals are transmitted to all relevant viewing locations.

The disadvantage of this approach is that the bandwidth required for the transmission of the video signals is rather high due to the multiple replication of the video signals.

US 2013 / 0 021 524 A1 discloses a multiviewer system according to the preamble of claim 1.

US 2002 / 0 116 539 A1 discloses a large scale display system comprising a plurality of computing devices. The computing devices may include a control computer, a display computer, a source computer, and a remote control computer.

Accordingly, the object of the present invention is to provide a multiviewer system as well as a method that allow for a more efficient distribution of data.

According to the invention, the problem is solved by a scalable multiviewer system according to claim 1.

Therein and in the following, the term "data sink" is used to denote all kinds of devices on an output side of the at least one communication module that may receive the input signal transmitted by the at least one communication module. For example, the term "data sink" comprises a user device, such as a personal computer, a laptop, a smartphone, a tablet or a dedicated user-side multiviewer device.

In other words, the term "data sink" is associated with a respective client-side device.

The term "communication module" is used to denote a functional unit comprising suitable hardware and software. Generally, the communication modules may be established as individual physical modules of a single server, and/or as individual physical modules of several interconnected servers forming a network.

The at least one data source may be established as a video signal source and/or as an audio signal source. Accordingly, the input signal may be a video signal and/or an audio signal.

Particularly, the input signal is packetized. In other words, the input signal comprises several data packages, wherein the information to be transmitted is comprised in these data packages.

Alternatively or additionally, the processing module may be configured to packetize the input signal before transmitting the input signal to the output and/or to the channel interface for the inter-module communication channel.

According to the invention, the input signal is transmitted via the at least one communication module only to certain data sinks, namely only to such data sinks that are specified by the at least one communication parameter.

In other words, the at least one communication parameter determines which data sink receives signals from which data sources.

Accordingly, the network addresses of the data sinks that need to receive a specific input signal may be specified by the at least one preset communication parameter.

Thus, the overall network traffic is reduced, as the input signal is transmitted only to those data sinks that really need it or that have requested to receive the corresponding input signal.

Moreover, no central controller is required in order to distribute different input signals to different data sinks, as the at least one communication module (or several communication modules) is already programmed to distribute the input signal in the intended way.

With the multiviewer system according to the invention, a user may simply select the data sources from which the data shall be transferred to the data sink associated with the user. The at least one communication parameter is then re-programmed via the communication bus such that the inputs signals from the different data sources are distributed correctly.

Again, no central controller for the communication modules is required. Instead, the communication parameters of the communication modules are adapted via the communication bus and stored on the respective communication modules, such that the input signals from different data sources are distributed correctly.

The communication bus is configured to distribute a parameter adaptation request from the at least one data sink to the at least one communication module. Generally, the parameter adaptation request corresponds to a request of the user to receive the signals from certain ones of the data sources. In other words, the user may choose the data sources from which the signals are to be received via the parameter adaptation request.

The communication bus is configured to distribute the parameter adaptation request to all communication modules. In other words, the communication bus is configured to broadcast the parameter adaption request to the communication modules.

For instance, the communication bus is configured to multicast the parameter adaption request when distributing the parameter adaption request.

The communication parameters of each of the communication modules are adapted based on the parameter adaptation request. In other words, the complete network may be reconfigured based on the parameter adaptation request such that the input signals from the data sources are distributed to the data sinks correctly.

The processing module may comprise one or several processing units. For example, the processing module comprises one or several CPUs, GPUs, FPGAs, etc.

Particularly, the processing module comprises a processing unit that is connected to each of the input, the output, and the channel interface for the inter-module communication channel.

Alternatively, the processing module may comprise several interconnected processing units, wherein at least one of the several interconnected processing units is connected to only one of the input, the output, and the channel interface for the inter-module communication channel.

Particularly, the processing module comprises three interconnected processing units, wherein each of the interconnected processing unit is connected to only one of the input, the output, and the channel interface for the inter-module communication channel.

According to an aspect of the invention, the at least one communication module comprises at least one network interface card, wherein the at least one network interface card comprises the first network interface, the second network interface and/or the channel interface for the inter-module communication channel. Accordingly, all or at least more than one of the interfaces may be integrated onto a single network interface card. Thus, less hardware is needed and the costs of the communication module are reduced.

Alternatively, the communication module may comprise several interconnected network interface cards that are each associated with at least one of the input, the output, and the channel interface for the inter-module communication channel. This way, a higher bandwidth may be achieved.

According to another aspect of the invention, the communication bus is configured to distribute a list of available data sources to the at least one data sink. Thus, instead of distributing, for instance multicasting or rather broadcasting, all input signals to all data sinks, only the list of available data sources is distributed to the data sinks. As already explained above, the user may choose which signals from which data source shall be transmitted to the respective data sink. As the list of available data sources has a considerably lower data volume than the input signals, the overall needed network bandwidth is reduced.

Particularly, the communication bus is configured to distribute a list of available data sources to all data sinks. In other words, the communication bus may be configured to broadcast the list of available data sources to the data sinks.

Particularly, the communication bus is based on a Message Queuing Telemetry Transport (MQTT) protocol or another messaging protocol. This protocol requires a particularly low bandwidth, such that the network traffic is further reduced.

Alternatively, the communication bus may be based on an Advanced Message Queuing Protocol (AMQP), a Constrained Application Protocol (CoAP), an Extensible Messaging Presence Protocol (XMPP) or any other suitable protocol.

In a further embodiment of the invention, the at least one data source is immediately connected to at most one communication module. Thus, input signals generated by each of the data sources are each only received by exactly one communication module (and not multiple times). Accordingly, the network traffic is further reduced.

It is noted that several data sources may be connected to the same communication module, but not the other way around. Accordingly, each communication module may receive input signals from several data sources. However, each data source transmits a respectively generated input signal to only one communication module.

According to an aspect of the invention, the at least one preset communication parameter comprises at least one of the following parameters: a communication protocol, a data rate, a sample rate, a resolution, and/or a data compression. In other words, the user may not only choose from which data sources input signals are to be received, but may also choose a suitable communication protocol by means of which the respective input signal is transmitted to the data sink. Alternatively or additionally, the user may choose the quality (and thus the data volume needed) of the transmitted input signal by adapting the data rate, the sample rate, the resolution and/or the data compression.

According to another aspect of the preset invention, the multiviewer system comprises at least two communication modules, wherein the at least two communication modules are interconnected via their channel interfaces for the inter-module communication channel. As each of the communication modules comprises a processing module, the overall available computational power of the multiviewer system is enhanced. For example, the individual communication modules may correspond to individual modules of a single server or to individual modules of different interconnected servers forming a network.

According to a further embodiment of the invention, a first one of the at least two communication modules is connected to at least a first data sink via the output of the first communication module, and a second one of the at least two communication modules is connected to at least a second data sink via the output of the second communication module, wherein the first data sink and the second data sink are different from each other. Particularly, each communication module may be connected to a set of data sinks, wherein the sets of data sinks are pairwise disjoint.

In other words, each client-side device is connected to a single server, and the requested input signal is transmitted to the client-side device only via that particular server. This way, the network traffic is further reduced.

Particularly, the processing modules of the respective communication modules are configured to communicate with each other. The processing modules may use the communication protocol of the communication bus, particularly the Message Queuing Telemetry Transport protocol. Alternatively or additionally, the processing modules may use a separate communication protocol for communicating with each other.

According to another aspect of the invention, no central control module is provided in order to control the communication modules. As already mentioned above, no central controller is required in order to distribute different input signals to different data sinks, as the at least one communication module (or several communication modules) is already programmed to distribute the input signal in the intended way. Instead, if changes are requested, the communication parameters of the communication modules are adapted via the communication bus and stored on the respective communication modules, such that the input signals from different data sources are distributed correctly according to the requested changes.

In a further embodiment of the present disclosure, the multiviewer system is configured such that the at least one preset communication parameter is programmable via the output by means of the communication bus of the multiviewer system. Thus, the individual communication modules may receive the parameter adaptation request described above via the respective output of the respective communication module. Additionally or alternatively, the communication modules may receive the parameter adaptation request via the respective channel interface for the inter-module communication channel, i.e. from another communication module.

Particularly, the multiviewer system comprises a client-side device connected with the output, wherein the client-side device comprises a user interface via which the at least one preset communication parameter is set to direct the input signal in a defined manner. For example, the list of available data sources may be displayed to the user via the user interface. Thus, the user may simply select the data sources from which signals are to be received via the user interface. The client-side device may then automatically generate a corresponding parameter adaptation request that is then transmitted to the communication modules by means of the communication bus.

According to the invention, the problem further is solved by a method according to claim 12.

Regarding the advantages and further properties of the method, reference is made to the explanations given above with respect to the multiviewer system, which also hold for the method and vice versa.

A parameter adaptation request is distributed from at least one of the data sinks to all communication modules via the communication bus. Generally, the parameter adaptation request corresponds to a request of the user to receive the input signals from certain ones of the data sources. In other words, the user may choose the data sources from which the signals are to be received via the parameter adaptation request.

According to an aspect of the present disclosure, a list of available data sources is distributed to at least one of the data sinks via the communication bus. Thus, instead of distributing all input signal to all data sinks, only the list of available data sources is distributed to the data sinks. As already explained above, the user may choose which signals from which data source shall be transmitted to the respective data sink. As the list of available data sources has a considerably lower data volume than the input signals, the overall needed network bandwidth is reduced.

Particularly, the list of available data sources is distributed to all data sinks via the communication bus. In other words, the communication bus may be configured to broadcast the list of available data sources to the data sinks.

Particularly, the communication bus is based on a Message Queuing Telemetry Transport protocol. This protocol requires a particularly low bandwidth, such that the network traffic is further reduced.

In a further embodiment of the present disclosure, the at least one preset communication parameter comprises at least one of the following parameters: a communication protocol, a data rate, a sample rate, a resolution, and/or a data compression. In other words, the user may not only choose from which data sources input signals are to be received, but may also choose a suitable communication protocol by means of which the respective input signal is transmitted to the data sink. Alternatively or additionally, the user may choose the quality (and thus the data volume needed) of the transmitted input signal by adapting the data rate, the sample rate, the resolution and/or the data compression.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a block diagram of a scalable multiviewer system according to the invention; and
- Figure 2 shows a flow chart of a method according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

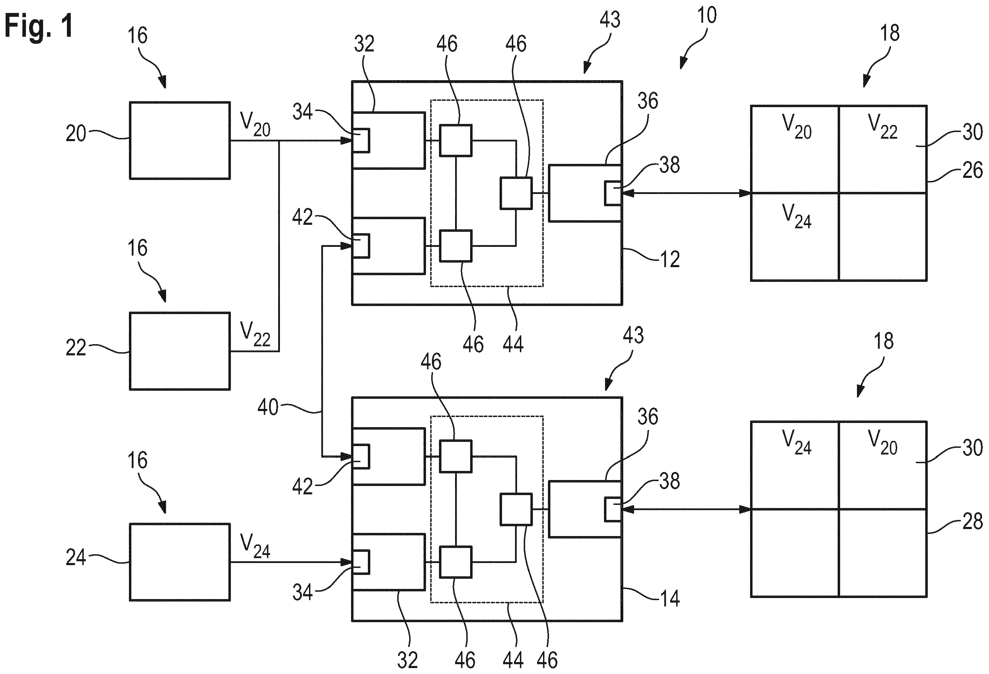

Figure 1 schematically shows a block diagram of a scalable multiviewer system 10.

The multiviewer system 10 comprises a first communication module 12, a second communication module 14, several data sources 16, and several data sinks 18.

Therein and in the following, the term "data sink" is used to denote all kinds of devices on a receiving side of the multiviewer system 10. For example, the term "data sink" comprises a user device, such as a personal computer, a laptop, a smartphone, a tablet or a dedicated user-side multiviewer device.

In other words, the term "data sink" is associated with a respective client-side device.

Moreover, the term "communication module" is used to denote a functional unit comprising suitable hardware and software. Generally, the communication modules may be established as individual physical modules of a single server, and/or as individual physical modules of several interconnected servers forming a network.

In the example shown in Figure 1, the several data sources 16 comprise a first video and/or audio source 20 ("VA source" in the following), a second VA source 22, and a third VA source 24.

It is noted that the number of three VA sources 20, 22, 24 is chosen only for illustration purposes. Of course, the multiviewer system 10 may comprise any other number of VA sources.

Each of the data sources 16 is immediately connected to exactly one of the communication modules 12, 14. Thus, input signals generated by the data sources 16 are only transmitted to one of the communication module 12, 14, respectively.

The several data sinks 18 correspond to a first client-side device 26 and a second client-side device 28. The client-side devices 26, 28 may be located at different geographic locations.

Each of the client-side devices 26, 28 comprises several display areas 30. The display areas 30 may be sub-areas of a larger display. Alternatively, the display areas 30 may be established as separate display devices, e.g. monitors.

It is noted that the number of two client-side devices 26, 28 is chosen only for illustration purposes. Of course, the multiviewer system 10 may comprise any other number of signal sinks, particularly client-side devices.

In the exemplary embodiment shown in Figure 1, the first communication module 12 is connected to the first client-side device 26, and the second communication module 14 is connected to second client-side device 28.

In general, each communication module 12, 14 may be connected to a set of data sinks 18, wherein the sets of data sinks 18 are pairwise disjoint.

In other words, each client-side device 26, 28 is connected to a single server, and the requested input signal is transmitted to the client-side device 26, 28 only via that particular server.

**Generally** speaking, the multiviewer system 10 is configured to distribute input signals generated by the data sources 16 to the data sinks 18 in a particular manner, which will be explained in more detail below.

Therein, the input signals respectively may be established as a video signal and/or as an audio signal ("VA signal" in the following).

Without restriction of generality, the case of the input signals being pure video signals will be discussed in the following. Accordingly, in the following the input signals generated by the VA sources 20, 22, 24 are denoted by v₂₀, v₂₂, and v₂₄, respectively.

The users of the client-side devices 26, 28 may choose which of the input signals are to be displayed on the individual display areas 30.

In the example shown in Figure 1, all three input signals v₂₀, v₂₂, v₂₄ are to be displayed on the display areas 30 of the first client-side device 26, while only the two input signals *v*₂₀ and *v*₂₄ are to be displayed on the display areas 30 of the second client-side device 28.

The first communication module 12 and the second communication module 14 each comprise an input 32 with a first network interface 34 and an output 36 with a second network interface 38.

Further, an inter-module communication channel 40 is provided between the communication modules 12, 14 wherein each communication module 12, 14 has a dedicated channel interface 42 associated with the inter-module communication channel 40.

The communication modules 12, 14 may comprise at least one network interface card 43 (hardware means), wherein the at least one network interface card 43 comprises the first network interface 34, the second network interface 38 and/or the channel interface 42.

Alternatively, the communication modules 12, 14 may comprise several interconnected network interface cards 43 that are each associated with at least one of the input 32, the output 36, and the channel interface 42 for the inter-module communication channel 40.

The communication modules 12, 14 further each comprise a processing module 44.

In the exemplary embodiment shown in Figure 1, the processing module 44 comprises three processing units 46.

For example, the processing units 46 may each be established as a CPU, as a GPU, as a FPGAs, etc.

Each of the input 32, the output 36 and the channel interface 42 for the inter-module communication channel 40 is immediately connected to only one of the processing units 46, respectively.

Moreover, the processing units 46 are interconnected with each other.

It is noted that the number of three processing units 46 is chosen only for illustration purposes. The processing module 44 may also comprise any other number of processing unit 46, particularly one or two processing units 46 or even more than three processing units 46.

Particularly, the processing module 44 may comprise a single processing unit 46 that is immediately connected to each of the input 32, the output 36, and the channel interface 42 for the inter-module communication channel 40.

Alternatively, the processing module 44 may comprise two processing units 46. For example, one of the two processing units 46 may be immediately connected to the input 32 and the channel interface 42 for the inter-module communication channel 40, and the other one of the two processing units 46 may be immediately connected to the output 36.

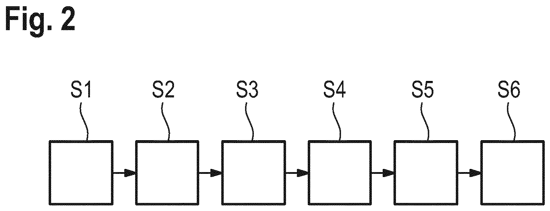

The multiviewer system 10 is configured to perform a method for distributing data from the data sources 16 to the data sinks 18, which is described in the following with reference to Figure 2.

The input signals v₂₀, v₂₂, and v₂₄ are received by the communication modules 12, 14 via the respective input 32 and forwarded to the processing module 44, particularly the respective processing unit 46 connected to the input 32 (step S1).

The respective processing unit 46 processes and analyzes the received input signal or the received input signals, thereby determining at least one quality parameter associated with the input signal (step S2).

Generally speaking, the at least one quality parameter is indicative of the quality of the video stream associated with the respective input signal. More precisely, the at least one quality parameter may indicate a resolution of the video stream, a data rate of the video stream, a sample rate of the video stream and/or a data compression of the video stream.

A list of all available data sources 16 is broadcasted to all data sinks 18 via a communication bus of the multiviewer system 10 (step S3).

Therein, the communication bus may be based on a Message Queuing Telemetry Transport (MQTT) protocol. However, any other suitable type of network protocol or messaging protocol may be used for the communication bus, for instance Advanced Message Queuing Protocol (AMQP), Constrained Application Protocol (CoAP) or Extensible Messaging Presence Protocol (XMPP).

Thus, instead of broadcasting all input signals v₂₀, v₂₂, v₂₄ to all data sinks 18, only the list of available data sources 16 is distributed to the data sinks 18.

The list of available data sources 16 may also comprise the quality parameters associated with the input signals v₂₀, v₂₂, v₂₄. Thus, the users of the first clients-side device 26 and of the second client-side device 28 are provided with an overview of all available input signals v₂₀, v₂₂, v₂₄ and of the respective quality of the input signals v₂₀, v₂₂, v₂₄.

The users may then choose which of the input signals v₂₀, v₂₂, v₂₄ are to be received, and in which quality the input signals v₂₀, v₂₂, v₂₄ are to be received. Moreover, the users may choose via which communication protocol the input signals v₂₀, v₂₂, v₂₄ are to be transmitted to the data sinks 18.

Particularly, the users may perform these settings via a user interface of the respective client-side device 26, 28.

A parameter adaptation request corresponding to the settings performed by the user is generated by each of the client-side devices 26, 28, respectively.

The parameter adaptation requests are each broadcasted to the communication modules 12, 14 via the communication bus of the multiviewer system 10 (step S4).

In general, the parameter adaptation request comprises a request for adapting at least one of the following parameters: a communication protocol via which the input signals v₂₀, v₂₂, v₂₄ are to be received by the respective client-side device 26, 28, a desired data rate with which the input signals v₂₀, v₂₂, v₂₄ are to be received by the respective client-side device 26, 28, a desired sample rate with which the input signals v₂₀, v₂₂, v₂₄ are to be received by the respective client-side device 26, 28, a desired resolution of the input signals v₂₀, v₂₂, v₂₄, and a data compression of the input signals v₂₀, v₂₂, v₂₄.

Based on the parameter adaptation requests, at least one communication parameter of the processing modules 44 is adapted, if necessary (step S5).

The at least one preset communication parameter comprises at least one of the following parameters: a communication protocol, a data rate, a sample rate, a resolution, and/or a data compression.

Moreover, the at least one communication parameter determines which data sink 18 receives signals from which data source 16.

If the preset communication parameters are already the same as requested, then the communication parameters are, of course, not adapted.

The processing modules 44 then process the input signals v₂₀, v₂₂, v₂₄ based on the adapted preset communication parameters and selectively forward the input signals v₂₀, v₂₂, v₂₄ to the respective output 36 and/or to the respective channel interface 42 for the inter-module communication channel 40 based on the adapted preset communication parameters (step S6).

Generally speaking, the processing modules 44 process and selectively forward the input signals v₂₀, v₂₂, v₂₄ in such a way that every one of the client-side devices 26, 28 receives the requested ones of the input signals v₂₀, v₂₂, v₂₄, namely in the requested quality and via the requested communication protocol.

Accordingly, if the quality of one of the input signals v₂₀, v₂₂, v₂₄ is higher than requested by one of the client-side devices 26, 28, the respective processing module 44 may downscale the corresponding input, thereby generating a downscaled input signal.

In other words, the processing module 44 may reduce the data size of the corresponding input signal v₂₀, v₂₂, v₂₄, for example by reducing the data rate and/or the sample rate of the corresponding input signal, or by compressing the corresponding input signal v₂₀, v₂₂, v₂₄.

In this case, the downscaled input signal is selectively forwarded to the respective output 36 and/or to the respective channel interface 42 associated with the inter-module communication channel 40 based on the adapted preset communication parameters.

Step S6 will be illustrated for an hypothetical example by means of the input signal v₂₀ generated by the first VA source 20.

For example, the input signal v₂₀ is a High Definition ("HD") video stream. The first client-side device 26 has requested to receive the input signal v₂₀ in HD, while the second client-side device 28 has requested to receive the input signal v₂₀ in Standard Definition ("SD").

Accordingly, the processing module 44 of the first communication module 12 transmits the input signal v₂₀ to the first client-side device 26 via the output 36 of the first communication module 12 without downscaling.

However, as the second client-side device 28 requested the input signal v₂₀ in SD, the processing module 44 of the first communication module 12 downscales the input signal v₂₀ from HD to SD, thereby generating the downscaled input signal.

The downscaled input signal is then transmitted to the second communication module 14 via the inter-module communication channel 40 associated with the first communication module 12 and the second communication module 14.

The downscaled input signal is then transmitted to the second client-side device 28 via the output 36 of the second communication module 14 by the processing module 44 of the second communication module 14.

Summarizing, the input signals are transmitted only to certain data sinks 18, namely only to such data sinks 18 that have requested to receive the respective input signal. Thus, a user may simply select the data sources 16 from which the data shall be transferred to the data sink 18 associated with the user. The preset communication parameters of the processing modules 44 of the communication modules 12, 14 are then re-programmed via the communication bus such that the input signals from the different data sources 16 are distributed correctly to the data sinks 18.

Therein, no central controller for the communication modules 12, 14 is required. Instead, the communication parameters of the communication modules 12, 14 are adapted via the communication bus and stored on the respective communication modules 12, 14, such that the input signals from different data sources 16 are distributed correctly.

## Claims

1. A scalable multiviewer system comprising at least one communication module (12, 14),
wherein the at least one communication module (12, 14) comprises at least one input (32) having a first network interface (34), wherein the at least one input (32) is associated with at least one data source (16),
wherein the at least one communication module (12, 14) comprises at least one output (36) having a second network interface (38), wherein the at least one output (36) is associated with at least one data sink (18),
wherein the at least one communication module (12, 14) comprises at least one channel interface (42) for an inter-module communication channel (40) configured to transfer data between the at least one communication module (12, 14) and at least one further communication module (12, 14),
wherein the at least one communication module (12, 14) comprises a processing module (44), wherein the processing module (44) is connected to the at least one input (32), the at least one output (36), and the at least one channel interface (42) in a signal transmitting manner,
wherein the processing module (44) is configured to receive an input signal from the at least one input (32),
wherein the processing module (44) is configured to selectively transmit the input signal to the at least one output (36) or to the at least one channel interface (42) based on at least one preset communication parameter, and
wherein the at least one preset communication parameter is programmable via a communication bus of the multiviewer system (10),
**characterized in that** the communication bus is configured to distribute a parameter adaptation request from the at least one data sink (18) to all communication modules (12, 14), wherein the parameter adaptation request corresponds to a request of a user to receive the signals from certain ones of the data sources (16), and wherein the communication parameters of the communication modules (12, 14) are adapted based on the parameter adaptation request.

2. The multiviewer system of claim 1, **characterized in that** the at least one communication module (12, 14) comprises at least one network interface card (43), wherein the at least one network interface card (43) comprises the first network interface (34), the second network interface (38) and/or the channel interface (42) for the inter-module communication channel (40).

3. The multiviewer system according to any one of the preceding claims, **characterized in that** the communication bus is configured to distribute a list of available data sources to the at least one data sink (18), particularly to all data sinks (18).

4. The multiviewer system according to any one of the preceding claims, **characterized in that** the communication bus is based on a Message Queuing Telemetry Transport protocol or another messaging protocol.

5. The multiviewer system according to any one of the preceding claims, **characterized in that** the at least one data source (16) is immediately connected to at most one communication module (12, 14).

6. The multiviewer system according to any one of the preceding claims, **characterized in that** the at least one preset communication parameter comprises at least one of the following parameters: a communication protocol, a data rate, a sample rate, a resolution, and/or a data compression.

7. The multiviewer system according to any one of the preceding claims, **characterized in that** the multiviewer system (10) comprises at least two communication modules (12, 14), wherein the at least two communication modules (12, 14) are interconnected via their channel interfaces (42) for the inter-module communication channel (40).

8. The multiviewer system of claim 7, **characterized in that** a first one of the at least two communication modules (12) is connected to at least a first data sink (18) via the output (36) of the first communication module (12), and that a second one of the at least two communication modules (14) is connected to at least a second data sink (18) via the output (36) of the second communication module (14), wherein the first data sink (18) and the second data sink (18) are different from each other.

9. The multiviewer system of claim 7 or 8, **characterized in that** the processing modules (44) of the respective communication modules (12, 14) are configured to communicate with each other.

10. The multiviewer system according to any one of the preceding claims, **characterized in that** the multiviewer system (10) is configured such that the at least one preset communication parameter is programmable via the output (36) by means of the communication bus of the multiviewer system (10).

11. The multiviewer system according to any one of the preceding claims, **characterized in that** the multiviewer system (10) comprises a client-side device (26, 28) connected with the output (36), wherein the client-side device (26, 28) comprises a user interface via which the at least one preset communication parameter is set to direct the input signal in a defined manner.

12. A method for distributing data from at least one data source (16) to several data sinks (18) via a scalable multiviewer system (10), wherein the method comprises the following steps:
- receiving an input signal from the at least one data source (16) via a first communication module (12); and
- selectively transmitting said input signal directly to at least one of the data sinks (18) or to at least a second communication module (14) based on at least one preset communication parameter;
wherein the at least one preset communication parameter is programmable via a communication bus of the multiviewer system (10),
**characterized in that** a parameter adaptation request is distributed from at least one of the data sinks (18) to all communication modules (12, 14) via the communication bus, wherein the parameter adaptation request corresponds to a request of a user to receive the signals from certain ones of the data sources (16), and wherein the communication parameters of the communication modules (12, 14) are adapted based on the parameter adaptation request.

13. The method of claim 12, wherein a list of available data sources (16) is distributed to at least one of the data sinks (18) via the communication bus, particularly to all data sinks.

## Patentansprüche

1. Skalierbares Multiviewer-System, das mindestens ein Kommunikationsmodul (12, 14) umfasst,
wobei das mindestens eine Kommunikationsmodul (12, 14) mindestens einen Eingang (32) mit einer ersten Netzschnittstelle (34) umfasst, wobei der mindestens eine Eingang (32) mindestens einer Datenquelle (16) zugeordnet ist;
wobei das mindestens eine Kommunikationsmodul (12, 14) mindestens einen Ausgang (36) mit einer zweiten Netzschnittstelle (38) umfasst, wobei der mindestens eine Ausgang (36) mindestens einer Datensenke (18) zugeordnet ist;
wobei das mindestens eine Kommunikationsmodul (12, 14) mindestens eine Kanalschnittstelle (42) für einen zwischen Modulen vorhandenen Kommunikationskanal (40) umfasst, der dazu konfiguriert ist, Daten zwischen dem mindestens einen Kommunikationsmodul (12, 14) und mindestens einem weiteren Kommunikationsmodul (12, 14) zu transferieren,
wobei das mindestens eine Kommunikationsmodul (12, 14) ein Verarbeitungsmodul (44) umfasst, wobei das Verarbeitungsmodul (44) mit dem mindestens einen Eingang (32), dem mindestens einen Ausgang (36) und der mindestens einen Kanalschnittstelle (42) in signalübertragender Weise verbunden ist,
wobei das Verarbeitungsmodul (44) dazu konfiguriert ist, von dem mindestens einen Eingang (32) ein Eingangssignal zu empfangen,
wobei das Verarbeitungsmodul (44) dazu konfiguriert ist, das Eingangssignal an den mindestens einen Ausgang (36) oder an die mindestens eine Kanalschnittstelle (42) basierend auf mindestens einem voreingestellten Kommunikationsparameter selektiv zu übertragen, und
wobei der mindestens eine voreingestellte Kommunikationsparameter über einen Kommunikationsbus des Multiviewer-Systems (10) programmierbar ist,
**dadurch gekennzeichnet, dass** der Kommunikationsbus dazu konfiguriert ist, eine Parameteranpassungsanforderung von der mindestens einen Datensenke (18) auf alle Kommunikationsmodule (12, 14) zu verteilen, wobei die Parameteranpassungsanforderung einer Anforderung eines Benutzers zum Empfangen der Signale von bestimmten der Datenquellen (16) entspricht und wobei die Kommunikationsparameter der Kommunikationsmodule (12, 14) basierend auf der Parameteranpassungsanforderung angepasst werden.

2. Multiviewer-System nach Anspruch 1, **dadurch gekennzeichnet, dass** das mindestens eine Kommunikationsmodul (12, 14) mindestens eine Netzschnittstellenkarte (43) umfasst, wobei die mindestens eine Netzschnittstellenkarte (43) die erste Netzschnittstelle (34), die zweite Netzschnittstelle (38) und/oder die Kanalschnittstelle (42) für den zwischen Modulen vorhandenen Kommunikationskanal (40) umfasst.

3. Multiviewer-System nach einem der vorhergehenden Ansprüche, **dadurch gekennzeichnet, dass** der Kommunikationsbus dazu konfiguriert ist, eine Liste verfügbarer Datenquellen auf die mindestens eine Datensenke (18), insbesondere auf alle Datensenken (18), zu verteilen.

4. Multiviewer-System nach einem der vorhergehenden Ansprüche, **dadurch gekennzeichnet, dass** der Kommunikationsbus auf einem Message-Queuing-Telemetry-Transport-Protokoll oder einem anderen Nachrichtenprotokoll basiert.

5. Multiviewer-System nach einem der vorhergehenden Ansprüche, **dadurch gekennzeichnet, dass** die mindestens eine Datenquelle (16) mit höchstens einem Kommunikationsmodul (12, 14) unmittelbar verbunden ist.

6. Multiviewer-System nach einem der vorhergehenden Ansprüche, **dadurch gekennzeichnet, dass** der mindestens eine voreingestellte Kommunikationsparameter mindestens einen der folgenden Parameter umfasst: ein Kommunikationsprotokoll, eine Datenrate, eine Abtastrate, eine Auflösung und/oder eine Datenkomprimierung.

7. Multiviewer-System nach einem der vorhergehenden Ansprüche, **dadurch gekennzeichnet, dass** das Multiviewer-System (10) mindestens zwei Kommunikationsmodule (12, 14) umfasst, wobei die mindestens zwei Kommunikationsmodule (12, 14) über ihre Kanalschnittstellen (42) für den zwischen Modulen vorhandenen Kommunikationskanal (40) miteinander verbunden sind.

8. Multiviewer-System nach Anspruch 7, **dadurch gekennzeichnet, dass** ein erstes der mindestens zwei Kommunikationsmodule (12) über den Ausgang (36) des ersten Kommunikationsmoduls (12) mit mindestens einer ersten Datensenke (18) verbunden ist und dass ein zweites der mindestens zwei Kommunikationsmodule (14) über den Ausgang (36) des zweiten Kommunikationsmoduls (14) mit mindestens einer zweiten Datensenke (18) verbunden ist, wobei sich die erste Datensenke (18) und die zweite Datensenke (18) voneinander unterscheiden.

9. Multiviewer-System nach Anspruch 7 oder 8, **dadurch gekennzeichnet, dass** die Verarbeitungsmodule (44) der jeweiligen Kommunikationsmodule (12, 14) dazu konfiguriert sind, miteinander zu kommunizieren.

10. Multiviewer-System nach einem der vorhergehenden Ansprüche, **dadurch gekennzeichnet, dass** das Multiviewer-System (10) derart konfiguriert ist, dass der mindestens eine voreingestellte Kommunikationsparameter über den Ausgang (36) mittels des Kommunikationsbusses des Multiviewer-Systems (10) programmierbar ist.

11. Multiviewer-System nach einem der vorhergehenden Ansprüche, **dadurch gekennzeichnet, dass** das Multiviewer-System (10) eine mit dem Ausgang (36) verbundene clientseitige Vorrichtung (26, 28) umfasst, wobei die clientseitige Vorrichtung (26, 28) eine Benutzerschnittstelle umfasst, über die der mindestens eine voreingestellte Kommunikationsparameter eingestellt wird, um das Eingangssignal in definierter Weise zu lenken.

12. Verfahren zum Verteilen von Daten von mindestens einer Datenquelle (16) auf mehrere Datensenken (18) über ein skalierbares Multiviewer-System (10), wobei das Verfahren die folgenden Schritte umfasst:
- Empfangen eines Eingangssignals von der mindestens einen Datenquelle (16) über ein erstes Kommunikationsmodul (12); und
- selektives Übertragen des Eingangssignals direkt an mindestens eine der Datensenken (18) oder an mindestens ein zweites Kommunikationsmodul (14) basierend auf mindestens einem voreingestellten Kommunikationsparameter;
wobei der mindestens eine voreingestellte Kommunikationsparameter über einen Kommunikationsbus des Multiviewer-Systems (10) programmierbar ist,
**dadurch gekennzeichnet, dass** eine Parameteranpassungsanforderung von mindestens einer der Datensenken (18) über den Kommunikationsbus auf alle Kommunikationsmodule (12, 14) verteilt wird, wobei die Parameteranpassungsanforderung einer Anforderung eines Benutzers zum Empfangen der Signale von bestimmten der Datenquellen (16) entspricht und wobei die Kommunikationsparameter der Kommunikationsmodule (12, 14) basierend auf der Parameteranpassungsanforderung angepasst werden.

13. Verfahren nach Anspruch 12, wobei eine Liste verfügbarer Datenquellen (16) über den Kommunikationsbus auf mindestens eine der Datensenken (18), insbesondere auf alle Datensenken, verteilt wird.

## Revendications

1. Système de visualisation multiple évolutif comprenant au moins un module de communication (12, 14),
l'au moins un module de communication (12, 14) comprenant au moins une entrée (32) ayant une première interface de réseau (34), l'au moins une entrée (32) étant associée à au moins une source de données (16),
l'au moins un module de communication (12, 14) comprenant au moins une sortie (36) ayant une seconde interface de réseau (38), l'au moins une sortie (36) étant associée à au moins un collecteur de données (18),
l'au moins un module de communication (12, 14) comprenant au moins une interface de canal (42) pour un canal de communication intermodule (40) configuré pour transférer des données entre l'au moins un module de communication (12, 14) et au moins un autre module de communication (12, 14),
l'au moins un module de communication (12, 14) comprenant un module de traitement (44), le module de traitement (44) étant connecté à l'au moins une entrée (32), à l'au moins une sortie (36) et à l'au moins une interface de canal (42) d'une manière permettant l'émission de signaux,
le module de traitement (44) étant configuré pour recevoir un signal d'entrée en provenance de l'au moins une entrée (32),
le module de traitement (44) étant configuré pour émettre de manière sélective le signal d'entrée à l'au moins une sortie (36) ou à l'au moins une interface de canal (42) sur la base d'au moins un paramètre de communication prédéfini, et
l'au moins un paramètre de communication prédéfini étant programmable par l'intermédiaire d'un bus de communication du système de visualisation multiple (10),
le système de visualisation multiple étant **caractérisé en ce que** le bus de communication est configuré pour distribuer une demande d'adaptation de paramètre depuis l'au moins un collecteur de données (18) à tous les modules de communication (12, 14), la demande d'adaptation de paramètre correspondant à une demande d'un utilisateur pour recevoir les signaux en provenance de certaines des sources de données (16), et les paramètres de communication des modules de communication (12, 14) étant adaptés sur la base de la demande d'adaptation de paramètre.

2. Système de visualisation multiple selon la revendication 1, **caractérisé en ce que** l'au moins un module de communication (12, 14) comprend au moins une carte d'interface de réseau (43), l'au moins une carte d'interface de réseau (43) comprenant la première interface de réseau (34), la seconde interface de réseau (38) et/ou l'interface de canal (42) pour le canal de communication intermodule (40).

3. Système de visualisation multiple selon l'une quelconque des revendications précédentes, **caractérisé en ce que** le bus de communication est configuré pour distribuer une liste de sources de données disponibles à l'au moins un collecteur de données (18), en particulier à tous les collecteurs de données (18).

4. Système de visualisation multiple selon l'une quelconque des revendications précédentes, **caractérisé en ce que** le bus de communication est basé sur un protocole de transport de télémétrie de mise en file d'attente de messages ou sur un autre protocole de messagerie.

5. Système de visualisation multiple selon l'une quelconque des revendications précédentes, **caractérisé en ce que** l'au moins une source de données (16) est connectée immédiatement à au plus un module de communication (12, 14).

6. Système de visualisation multiple selon l'une quelconque des revendications précédentes, **caractérisé en ce que** l'au moins un paramètre de communication prédéfini comprend au moins un des paramètres suivants : un protocole de communication, un débit de données, un taux d'échantillonnage, une résolution et/ou une compression de données.

7. Système de visualisation multiple selon l'une quelconque des revendications précédentes, le système de visualisation multiple (10) étant **caractérisé en ce qu'**il comprend au moins deux modules de communication (12, 14), les au moins deux modules de communication (12, 14) étant interconnectés par l'intermédiaire de leurs interfaces de canal (42) pour le canal de communication intermodule (40).

8. Système de visualisation multiple selon la revendication 7, **caractérisé en ce qu'**un premier des au moins deux modules de communication (12) est connecté à au moins un premier collecteur de données (18) par l'intermédiaire de la sortie (36) du premier module de communication (12), et **en ce qu'**un second des au moins deux modules de communication (14) est connecté à au moins un second collecteur de données (18) par l'intermédiaire de la sortie (36) du second module de communication (14), le premier collecteur de données (18) et le second collecteur de données (18) étant différents l'un de l'autre.

9. Système de visualisation multiple selon la revendication 7 ou 8, **caractérisé en ce que** les modules de traitement (44) des modules de communication (12, 14) respectifs sont configurés pour communiquer entre eux.

10. Système de visualisation multiple selon l'une quelconque des revendications précédentes, le système de visualisation multiple (10) étant **caractérisé en ce qu'**il est configuré de telle sorte que l'au moins un paramètre de communication prédéfini soit programmable par l'intermédiaire de la sortie (36) au moyen du bus de communication du système de visualisation multiple (10).

11. Système de visualisation multiple selon l'une quelconque des revendications précédentes, le système de visualisation multiple (10) étant **caractérisé en ce qu'**il comprend un dispositif côté client (26, 28) connecté à la sortie (36), le dispositif côté client (26, 28) comprenant une interface d'utilisateur par l'intermédiaire de laquelle l'au moins un paramètre de communication prédéfini est défini pour diriger le signal d'entrée d'une manière donnée.

12. Procédé de distribution de données depuis au moins une source de données (16) vers plusieurs collecteurs de données (18) par l'intermédiaire d'un système de visualisation multiple évolutif (10), le procédé consistant à :
- recevoir un signal d'entrée en provenance de l'au moins une source de données (16) par l'intermédiaire d'un premier module de communication (12) ; et
- émettre de manière sélective ledit signal d'entrée directement vers au moins un des collecteurs de données (18) ou vers au moins un second module de communication (14) sur la base d'au moins un paramètre de communication prédéfini ;
l'au moins un paramètre de communication prédéfini étant programmable par l'intermédiaire d'un bus de communication du système de visualisation multiple (10),
le procédé étant **caractérisé en ce qu'**une demande d'adaptation de paramètre est distribuée depuis au moins un des collecteurs de données (18) à tous les modules de communication (12, 14) par l'intermédiaire du bus de communication, la demande d'adaptation de paramètre correspondant à une demande d'un utilisateur pour recevoir les signaux en provenance de certaines des sources de données (16), et les paramètres de communication des modules de communication (12, 14) étant adaptés sur la base de la demande d'adaptation de paramètre.

13. Procédé selon la revendication 12, une liste de sources de données disponibles (16) étant distribuée à au moins un des collecteurs de données (18) par l'intermédiaire du bus de communication, en particulier à tous les collecteurs de données.
